# EUROPEAN PATENT SPECIFICATION

(11) **EP 2 706 886 B1**
(45) Date of publication and mention of the grant of the patent: **15.07.2015**
(21) Application number: 12721502.8
(22) Date of filing: 11.05.2012
(51) Int. Cl.: A47B 88/04

(54) **A SLIDING GUIDE RAIL**
SCHIEBEFÜHRUNGSSCHIENE
RAIL DE GUIDAGE COULISSANT

(30) Priority: 12.05.2011 SE 1150425; 12.05.2011 US 201161485366 P
(43) Date of publication of application: 19.03.2014
(73) Proprietor: Inter IKEA Systems B.V., 2616 LN Delft (NL)
(72) Inventor: PETERSSON, Christer, S-343 93 Älmhult (SE); HÅKANSSON, Pontus, S-211 59 Malmö (SE)
(74) Representative: Ström & Gulliksson AB
(86) International application number: PCT/EP2012/058736
(87) International publication number: WO 2012/152909

(56) References cited:
- AT-B- 385 887
- US-A1- 2002 190 618

## Description

### FIELD OF THE INVENTION

The present invention relates to a sliding guide rail. More particularly, the present invention relates to a sliding guide rail for allowing sliding opening and closing movement of a drawer.

### BACKGROUND ART

Sliding guide rails are commonly known for allowing smooth movement of drawers. Typically, a furniture carcass, such as a chest of drawers or a kitchen cabinet, includes a frame having an interior spacing in which a drawer is fitted. The drawer is held in place by means of guide rail assemblies, which preferably enable sliding movement to allow the drawer to move in and out from said furniture carcass in a substantially horizontal direction.

First parts of rail assemblies are attached to opposite sides of the interior wall of the furniture carcass, and second parts of the rail assemblies are attached to opposite sides of the outer walls of the drawer. The drawer is then put into position by engaging the first parts of the rail assemblies with the second part of the rail assemblies. In order to provide sliding motion of the drawer, the rail assemblies include rollers or other sliding members such that the second part of the rail assemblies may slide relative the first parts, which remain stationary.

Different technical developments have increased the popularity of sliding rail assemblies. For example, it is common to equip known slide assemblies with dampening devices and self-closing devices for improving the user experience.

However, one major drawback of sliding assemblies is that it is difficult to achieve a satisfactory alignment of the cabinet rail relative the drawer rail, and consequently achieve a satisfactory alignment of the chest or cabinet relative the drawer. In particular, alignment is crucial when the drawer is closed since a tilt of the drawer will not only contribute to a less aesthetic appearance, but also to reduced functionality and durability of the drawer. In case the drawer is angled relative a horizontal plane, the load on one of the sliding assemblies will exceed the load of the opposite sliding assembly such that the unbalanced wear will lead to decreased lifetime. This drawback of known sliding assemblies is particularly striking in cases where the drawer carries a lot of weight, which may be the case if the drawer is a part of a kitchen cabinet for storing e.g. cooking equipment. Also, even if care is taken when mounting, an increased load on the drawer may cause the alignment of the slide assemblies to change over time, such that a satisfactory alignment soon turns unsatisfactory.

Some solutions for vertical adjustment of a drawer exist, such as disclosed by US 2002/0190618 A1. However, this solution is complex since it comprises many separate parts. Furthermore, the adjustment is not permanent, due to material weakness of the solution, making subsequent re-adjustments necessary.

### SUMMARY OF THE INVENTION

Accordingly, the present invention seeks to mitigate, alleviate or eliminate one or more of the above-identified deficiencies and to provide an improved sliding guide rail for drawers.

It is an object of the invention to provide a sliding rail assembly which allows the drawer to be aligned with the chest or cabinet.

It is a further object of the present invention to provide a sliding rail assembly which allows for drawer alignment even after the rails have been fixedly attached to the drawer.

An idea of the present invention is to provide a sliding rail assembly which allows alignment by deforming the rail.

According to a first aspect of the invention, a sliding guide rail is provided. The sliding guide rail comprises means for attaching said rail to a drawer, a first surface continuously extending from a first end to a second end of said rail, said first surface being engageable with a sliding member of another rail, and an adjusting device capable of deforming said first surface at said second end, such that the position of said first surface at the second end is displaceable relative to said means for attaching said rail.

Said second end of said rail comprises an upper part including said first surface, and a lower part being separated from said upper part by means of a slit. This is advantageous in that said first surface may be deformed by means of said slit.

Said adjusting device is connected to said upper part and to said lower part, and said adjusting device may be rotatable relative said upper part and said lower part. Hence, the adjusting device may be used to change the distance between the upper part and the lower part such that the first surface is deformed.

In an embodiment, the slit is a cut-out located roughly in the middle of the sliding guide rail.

Said adjusting device is attached to said second end of said rail by means of an eccentric, which is advantageous in that the first surface may be deformed by changing the distance between the upper part and the lower part using said eccentric.

Said eccentric comprises a disc member arranged within a space, and wherein the outer periphery of said disc member and the outer periphery of said space comprise a plurality of engageable cogs for preventing unintentional rotation of the disc member within said space. Hence, the deformation of the first surface will remain.

Said first surface may be located on a runner flange with a U-shape for engaging with a wheel or roller acting as said sliding member. This is advantageous in that the sliding guide rail may be used for applications requiring wheels or rollers, thus allowing for improved performance of such applications.

According to a second aspect of the invention, a sliding rail assembly is provided. The sliding rail assembly comprises a first rail having a sliding member attached to said first rail, and a sliding guide rail according to the first aspect of the invention, wherein said sliding guide rail is engageable with said first rail for allowing sliding movement between said first rail and said sliding guide rail.

According to a third aspect of the invention, a drawer is provided. The drawer comprises at least one sliding rail assembly according to the second aspect of the invention, wherein a first rail of said assembly is attached to a frame of a chest or a cabinet, and wherein a sliding guide rail of said assembly is attached to said drawer.

According to a fourth aspect of the invention, a method for aligning a drawer is provided. The method comprises the steps of providing a first rail on a frame of a chest or a cabinet, providing a sliding guide rail on a drawer of said chest or cabinet, said sliding guide rail having a first surface continuously extending from a first end to a second end of said rail, said first surface being engageable with a sliding member of said first rail. The second end of said rail comprises an upper part including said first surface, and a lower part being separated from said upper part by means of a slit. The method further comprises, aligning said drawer by plastically deforming said first surface at said second end by means of an adjusting device, wherein said adjusting device is attached to said second end of said rail by means of an eccentric, and wherein said eccentric comprises a disc member arranged within a space, and wherein the outer periphery of said disc member and the outer periphery of said space comprises a plurality of engageable cogs for preventing unintentional rotation of the disc member within said space.

The adjusting device may be mounted to the upper part as well as to the lower part, such that the upper part is kept at a fixed distance from the lower part.

The advantages of the first aspect of the invention are also applicable for the second, third, and fourth aspects of the invention.

### BRIEF DESCRIPTION OF THE DRAWINGS

Hereinafter, the invention will be described with reference to the appended drawings, wherein:
Fig. 1 is an isometric view of a chest of drawers having a sliding guide rail according to an embodiment;
Fig. 2 is an isometric view of a sliding rail assembly according to an embodiment;
Fig. 3 is an isometric view of an end of a sliding guide rail according to an embodiment;
Fig. 4 is an isometric view of a first part of an eccentric according to an embodiment;
Fig. 5 is an isometric view of a second part of an eccentric according to an embodiment;
Fig. 6a - b are side views of the eccentric shown in Figs. 5 and 6, showing different alignment modes;
Fig. 7a - c are side views of an end of a sliding guide rail according to an embodiment, showing different alignment modes;
Fig. 8a - f are side views of an end of a sliding guide rail according to six different embodiments;
Fig. 9 is a side view of an adjusting device not according to the invention;
Fig. 10 is an isometric view of the adjusting device shown in Fig. 9;
Fig. 11a is a side view of an adjusting device according to a further embodiment
Fig. 11b is a cross sectional isometric view of the adjusting device shown in Fig. 11a, and
Fig. 11c is a cross sectional view of the adjusting device shown in Fig. 11a and 11b.

### DESCRIPTION OF EMBODIMENTS

Below, several embodiments of the invention will be described with references to the drawings. These embodiments are described in illustrating purpose in order to enable a skilled person to carry out the invention and to disclose the best mode. However, such embodiments do not limit the invention, but other combinations of the different features are possible within the scope of the invention.

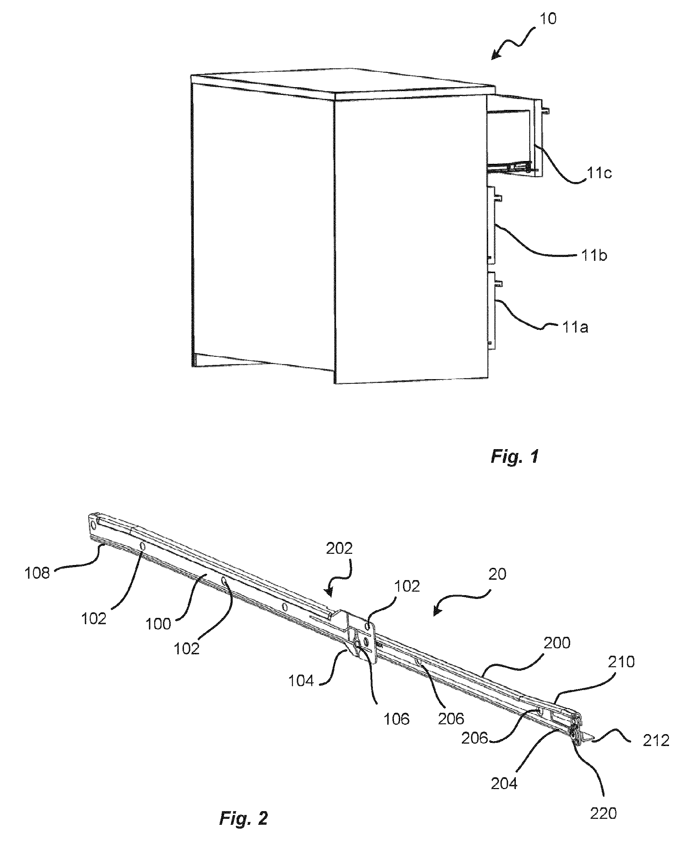

Starting with Fig. 1, a furniture carcass 10, such as a chest of drawers, including three drawers 11a, 11b, and 11c is shown. The upper drawer 11c is pulled out from the frame into a semi-opened position by means of a sliding rail assembly 20, which allows the drawer 11c to be pulled and pushed between an open and a closed position by a sliding motion. The sliding motion is provided by means of the sliding rail assembly 20, which is shown in further details in Fig. 2.

The sliding rail assembly 20 comprises a first rail 100 and a sliding guide rail 200. The first rail 100 has through holes 102 which may be used to securely attach the first rail 100 to the interior wall of the furniture carcass 10. Of course other means may be utilized for providing attachment to the cabinet, such as adhesives, clamps, etc. At a front end 104 a sliding member in the form of a wheel or roller is mounted. The wheel or roller is facing the interior space of the cabinet, and is mounted to the first rail by a joint 106.

The first rail 100 extends substantially linearly and horizontally from the front end 104 towards the back end 108. However, the back end 108 comprises a downhill slope for providing a self-closing functionality of the sliding rail assembly 20. Preferably, the back end 108 has a slope of approximately 1 to 10°.

The first rail 100 further includes a supporting runner flange extending inwardly, i.e. towards the interior space of the furniture carcass, and thus forming a planar and horizontal surface being perpendicularly arranged with respect to the lengthwise extension of the first rail 100. The planar surface of the runner flange of the first rail 100 is thus provided in order to guide a further sliding member of a sliding guide rail 200, which will be described in further details from now on.

The sliding guide rail 200 extends generally linearly and horizontally from a first end 202 to a second end 204. Through holes 206 are provided along a vertical web of the sliding guide rail 200 between the first end 202 and the second end 204 for allowing the sliding guide rail 200 to be securely attached to the drawer 11a, 11b, or 11c. Hence, when the sliding guide rail 200 is attached to a drawer 11 a, 11b, or 11c the sliding guide rail 200 will be substantially parallel with the first rail 100 of the chest or cabinet.

A sliding member, preferably in the form of a wheel or a roller, is mounted on the sliding guide rail 200 at the first end 202. The wheel or roller is thus arranged to engage with the supporting surface of the first rail 100. Further, the sliding guide rail 200 comprises a horizontally and longitudinally arranged runner flange 210 continuously extending from the first end 202 to the second end 204 of the vertical web of said sliding guide rail 200. The flange 210 thus comprises an interaction surface along which the wheel or roller of the first rail 100 may run. The runner flange 210 is preferably U-shaped for accommodating the roller of the first rail 100. When the flange 210 is U-shaped the cooperation between the first rail 100 and the sliding guide rail 200 may be improved, since the sliding guide rail 200 may be hung onto the first rail 100 in a way avoiding relative lateral movement. This means that the sliding guide rail 200 may move along the first rail 100 in a sliding motion, since the wheel or roller of the first rail 100 and the roller of the sliding guide rail 200, as well as the runner flanges of the rails 100, 200, ensure parallel and sliding movement.

The sliding guide rail 200 has a support flange 212 extending inwardly from the sliding guide rail 200, facing away from the first rail 100, and extending horizontally and longitudinally of the sliding guide rail 200. The support flange 212 may be used to carry some weight of the drawer 11a, 11b, 11c, as well as for facilitating alignment of the sliding guide rail 200 before permanently attaching the sliding guide rail 200 to the drawer 11a, 11b, 11c.

Two sliding guide rails 200 are preferably mounted to each side of the drawer, and corresponding first rails 100 are mounted on each interior wall of the chest or cabinet such that they may engage with the sliding guide rails 200. It is readily understood that one sliding rail assembly 20 needs to be a mirror of the second sliding rail assembly 20 in order to be correctly mounted.

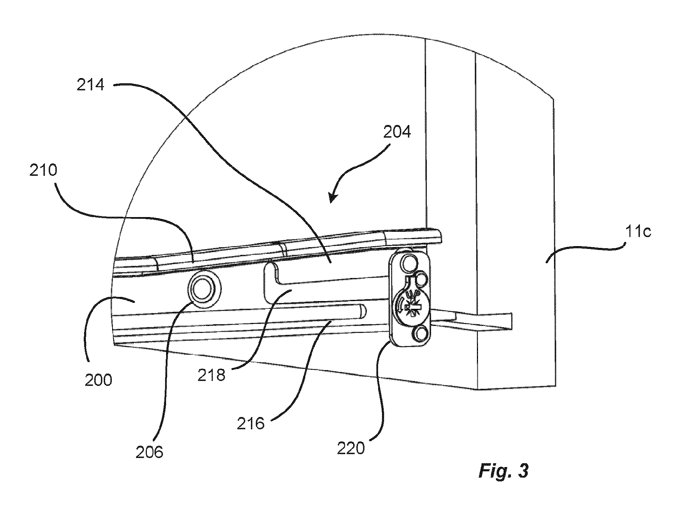

At the second end 204 of the sliding guide rail 200 an adjusting device 220 is arranged. The second end 204 and the adjusting device 220 will be further described with reference to Fig. 3, which shows a perspective view on those details when mounted on a drawer.

The second end 204 of the sliding guide rail 200 is slightly tilted relative the horizontal extension of the sliding guide rail 200 in order to keep the drawer in a horizontal alignment when the drawer is closed, as the self-closing slope of the first rail 100 will cause the drawer to tilt. Hence, the tilt of the second end 204 will compensate for the self-closing slope of the first rail 100, such that the drawer is kept horizontal.

The second end 204 of the vertical web is divided into an upper part 214 and a lower part 216, the upper part 214 being separated from the lower part 216 by means of a slit 218 in the form of a cut-out. The slit 218 may be a cut-out located roughly in the middle of the sliding guide rail 200. Thus, at the second end 204, the upper part 214 and the lower part 216 each comprises a vertical portion, i.e. aligned parallel to the wall of the drawer 11a, 11b, 11c of the sliding guide rail 200. The upper part 214 includes the supporting surface 210, while the lower part 216 includes the support 212 for the roller of the first rail 100. The supporting surface 210 extends horizontally, substantially perpendicular to vertical web, and thus substantially perpendicular to the upper part 214. Since the upper part 214 and the lower part 216 each comprises a vertical portion of the sliding guide rail 200, the construction is stable and durable. An advantage with this are increased load bearing properties of the supporting surface 210, included in the upper part 214, and the support 212, included in the lower part 216, respectively.

Another effect of this is that any deformation, which may occur as a result of adjustment, will be substantially plastic. This is advantageous, since the adjustment will then be permanent.

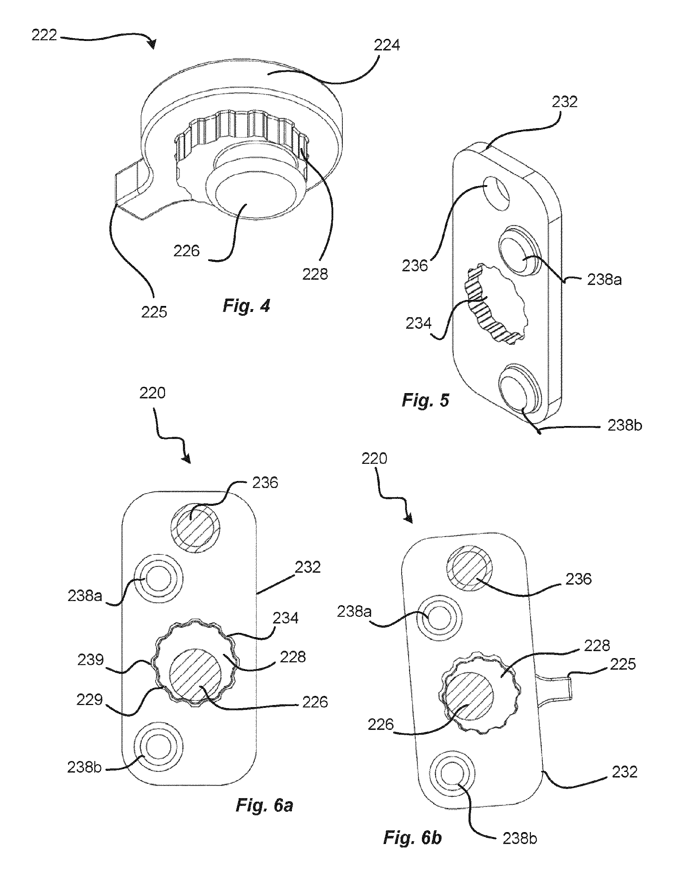

At the open end of the second end 204, i.e. at the position of the open end of the slit 218, the adjusting device 220 is arranged. The adjusting device 220 is mounted to the upper part 214 as well as to the lower part 216, such that the upper part 214 is kept at a fixed distance from the lower part 216. This is advantageous, since it increases the stability and durability of the construction. An advantage with this are increased load bearing properties of the supporting surface 210, included in the upper part 214, and the support 212, included in the lower part 216, respectively.The adjusting device 220 includes two parts, namely an eccentric 222 and a mounting plate 232. These are shown with reference to Figs. 4 and 5. The eccentric 222 has a head 224 and a bolt 226 mounted to said head via a disc member 228. The head 224 and the disc member 228 are arranged coaxially, while the bolt 226 is mounted on the disc member 228 such that the central axis of the bolt 226 is off center aligned with the head 224 and the disc member 228.

The bolt 226 is fitted into a through hole of the lower part 216 of the second end 204 of the sliding guide rail 200, such that the eccentric 222 is allowed to rotate within said through hole, while it is prevented to move axially in a direction being parallel with the central axis of the bolt 226 or disc member 228.

The head 224 has a generally circular shape, except for a protrusive portion 225 extending radially out from the head. The head is preferably engageable with a screw for driving the eccentric 222. It is however also envisioned that the head 224 may have other shapes than generally circular.

The mounting plate 232 includes a space 234 which is configured to hold the disc member 228 of the eccentric 222. Further, a through hole 236 is arranged at the upper part of the mounting plate 232 for allowing the mounting plate 232 to be attached to the upper part 214 of the second end 204 of the sliding guide rail 200. The mounting plate 232 further includes two protrusive areas 238a, 238b which are arranged at a distance from the space 234, such that the protrusive portion 225 of the eccentric 222 may engage with the protrusive areas 238a, 238b in order to prevent further rotation of the eccentric within the space 234.

The adjusting device 220 may be mounted to the sliding guide rail 200 in various ways; however, the mounting plate 232 may preferably be attached to the upper part 214 of the sliding guide rail 200 by means of a bolt or any similar means at a first step. At a next step, the space 234 of the mounting plate 232 is aligned with the through hole of the lower part 216 of the second end 204 of the sliding guide rail 200. The eccentric, at this stage not provided with the bolt 226, is the inserted into the space 234. A bolt 226 is then attached to the eccentric 222 from the back side of the lower part 216 such that the eccentric 222 is securely, but still rotatably, attached to the mounting plate 232 and the sliding guide rail 200.

In Fig. 6a and Fig. 6b, the adjusting device 220 is shown from the back side. According to what has been described above, the adjusting device 220 is attached to the upper part 214 of the second end 204 of the sliding guide rail 200 by means of the bolt 236, and the lower part 216 of the second end 204 of the sliding guide rail 200 by means of the bolt 226. In Fig. 6a, the head 224 is in a position where the protrusive portion 225 is directed upwards, or towards the bolt 236. Here, the protrusive portion 225 is in contact with the protrusive area 238a such that the portion 225 is in its uppermost position.

In Fig. 6b, the head 224 of the eccentric 222 has been rotated about 90°. Due to this movement, the bolt 226 will be displaced and consequently the actual distance between the bolts 226, 236 is decreased. Further decrease of the distance is accomplished by rotating the head additionally 90° such that the protrusive portion 225 is in its lowest position.

As can be seen in Fig. 6a and 6b, the space 234 is somewhat larger than the disc member 228. Further, the space 234 as well as the disc member 228 is provided with cogs 229, 239, or teeth along its periphery. When the bolt 226 is positioned at a maximum distance from the bolt 236, i.e. in the position shown in Fig. 6a, the cogs 229, 239 of the space 234 and the disc member 228 will slightly engage such that the disc member 228 may rotate within the space 234. When the drawer is in an extended position, the cogs 229, 239 do not give rise to a clicking sound, since there is no friction between the cogs 229, 239 and the space in this position. However, in an inserted/closed state, the cogs 229, 239 will engage the space 234, whereby its relative position is maintained. Thus, the drawer may be easily corrected in an extended state, while the corrected position may be effectively maintained in the inserted state. However, when the eccentric 222 is rotated the distance between the bolts 226, 236 will decrease. Since the upper part 214 and the lower part 216 of the second end 204 of the sliding guide rail 200 are urged to move towards each other, a corresponding force will urge the disc member 228 downwards, in the inserted/closed state. Consequently, the cogs or teeth 229, 239 of the space 234 and the disc member 228 will engage such that unintentional rotation of the disc member 228 within the space 234 is prevented. Consequently, when the distance between the bolts 226, 236 is decreased the bolts 226, 236 will remain in this position due to the provision of the cogs 229, 239.

The embodiments here above in relation to the adjusting device 220, including the eccentric 222 and the mounting plate 232, and the disclosed features thereof, in accordance with Fig. 4, Fig. 5, Fig. 6a, and/or Fig. 6b are described in illustrating purpose only, and may be implemented in other systems and/arranged in other furniture parts in need of relative adjustment in position, and are as such not in need of other features disclosed herein for their inter-relational function.

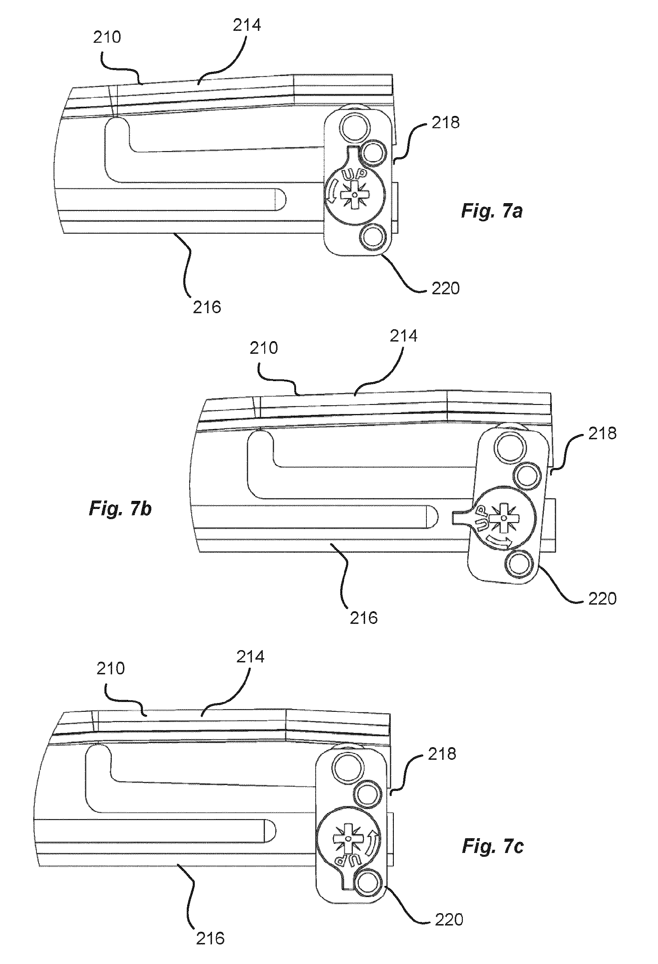

Now with reference to Figs. 7a, 7b, and 7c the operational principle of the sliding guide rail 200 will be described. The drawer, being attached to the sliding guide rail 200, rests on a roller of a first rail (not shown) via the U-shaped surface 210. The adjusting device 220 is positioned in an idle mode where the distance between the bolts 226, 236 are kept at a maximum. When used, the drawer should be aligned with the chest or cabinet both horizontally and vertically. In cases where this is not the case, for example if the sliding guide rail has been mounted slightly wrong on the drawer, or due to uneven floor or ground on which the piece of furniture is placed, the adjusting device 220 may provide a correcting functionality. Now referring to Fig. 7b, the eccentric of the adjusting device 220 has been rotated approximately 90°, and the distance between the bolts 226, 236 has decreased such that the upper part 214 is forced to move towards the lower part 216 of the second end 204 of the sliding guide rail 200. If the drawer is still at a too low position, the eccentric may be rotated yet further to a position shown in Fig. 6c. Here, the protrusive area 238b prevents further rotation of the eccentric 222.

The slit 218 enables the upper part 214 to move towards the lower part 216 upon rotation of the eccentric 222. When the upper part 214 moves, it is deformed such that the slope of the second end 204 is changed. The upper part 214 is thus integrally formed with the lower part 216 and the sliding guide rail 200.

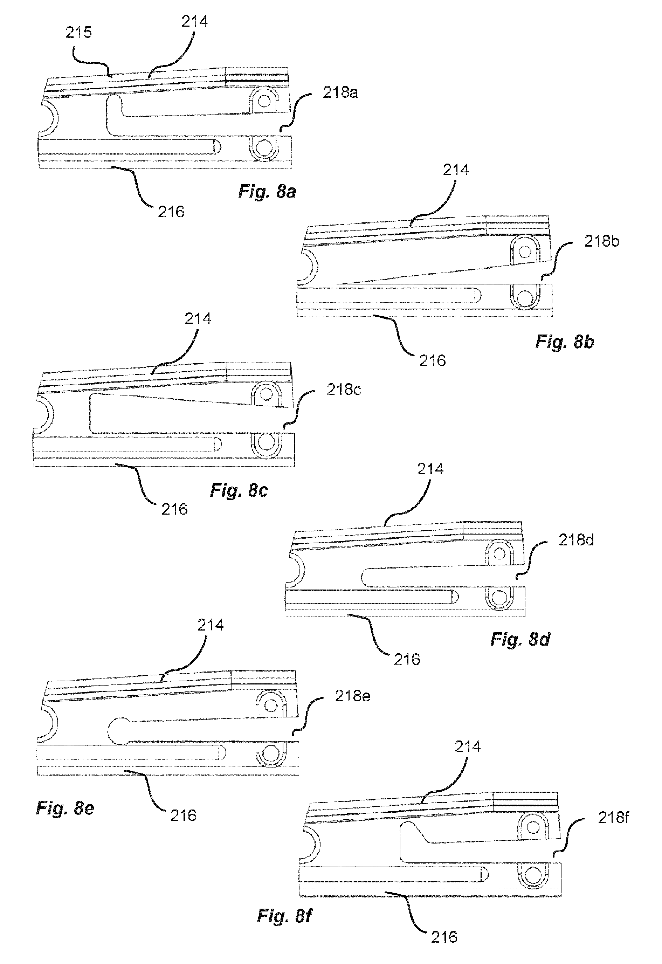

Different embodiments of the slit 218a - f will be described with reference to Figs. 8a - f. In these figures, the adjusting device is left out for illustrative purpose such that the slit 218a - f is shown in its entirety.

Starting with Fig. 8a, the slit 218a forms a space between the upper part 214 and the lower part 216 of the second end 204 of the sliding guide rail 200. The slit 218a is L-shaped, such that a horizontal leg of the slit 218a extends along the rail 200, while a vertical leg of the slit 218a extends from the horizontal leg towards the upper part 214. Hence, the upper part 214 will be urged to bend and deform around a point 215 located at the position where the upper part 214 has the least thickness, when an adjusting device is connected and operated according to what has been described above.

In Fig. 8b another embodiment of the slit 218b is shown. The slit has a wedge shape of which the apex is facing the first end of the sliding guide rail 200.

In Fig. 8c the wedge shape of Fig. 8b is turned relative its vertical axis, and the apex is truncated for leaving an opening between the upper part 214 and the lower part 216.

The slit 218d in Fig. 8d has a slightly conical shape, wherein the base of the conical shape forms the opening between the upper part 214 and the lower part 216.

In Fig. 8e, the slit of Fig. 8d further comprises an enlarged circular portion at the end, such that the apex of the cone is replaced by said circular portion.

Fig. 8f shows a slit 218f which is a modification of the slit 218a shown in Fig. 8a. Here, the horizontal leg and the vertical leg are connected by means of a tapered profile, such that the vertical leg is exhibiting a narrowing shape.

For all the slits 218a - f described above, the comers and/or edges are preferably rounded for reducing material stresses during deforming.

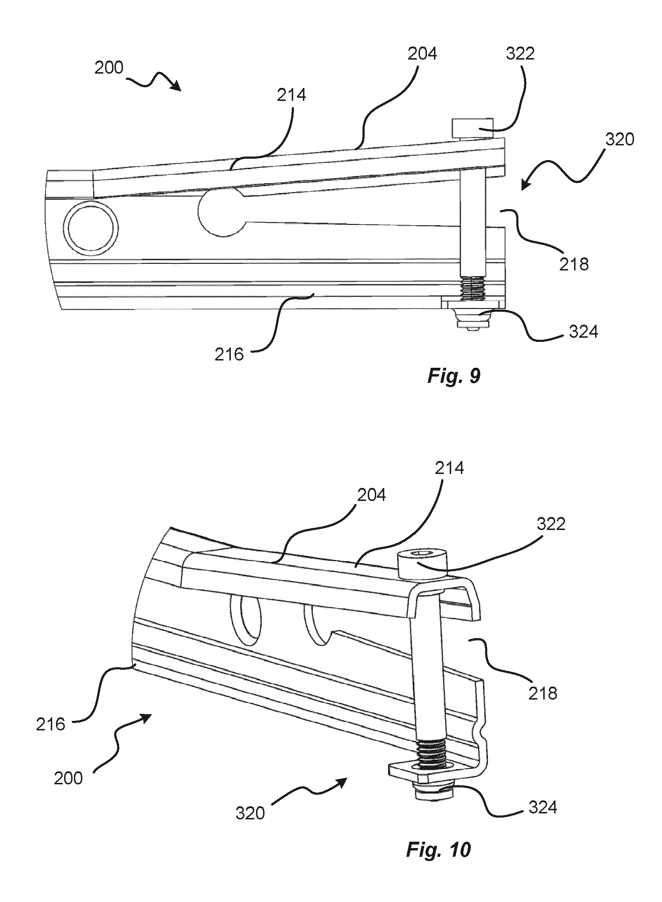

Figs 9 and 10 show an adjusting device 320 not according to the invention for use with a sliding guide rail 200. In accordance with the previously described embodiments the sliding guide rail 200 includes a second end 204 having a slit 218 separating an upper part 214 from a lower part 216. The sliding guide rail 200 is mounted on a drawer (not shown) such that the second end 204 of the sliding guide rail 200 is arranged adjacent to the front of the drawer. The upper part 214 includes a U-shaped surface which is configured to engage with a roller of a first rail mounted on the interior space of a chest or cabinet. The adjusting device 320 includes a bolt 322 and a nut 324. The bolt 322 is inserted into a through hole of the upper part 214 of the second end 204 and extends in a substantially vertical direction towards the lower part 216. The lower part 216 comprises the nut 324 having interior threads corresponding to the threads of the bolt 322. The slit 218 allows the bolt 322 and the nut 324 to change the distance between the lower part 216 and the upper part 214 and thus also the position of the drawer's front relative the first rail inside the cabinet when the drawer is closed. It should also be understood that the position of the bolt and nut could be changed, such that the nut is arranged at the upper part 214 and the bolt is inserted into a through hole of the lower part 216.

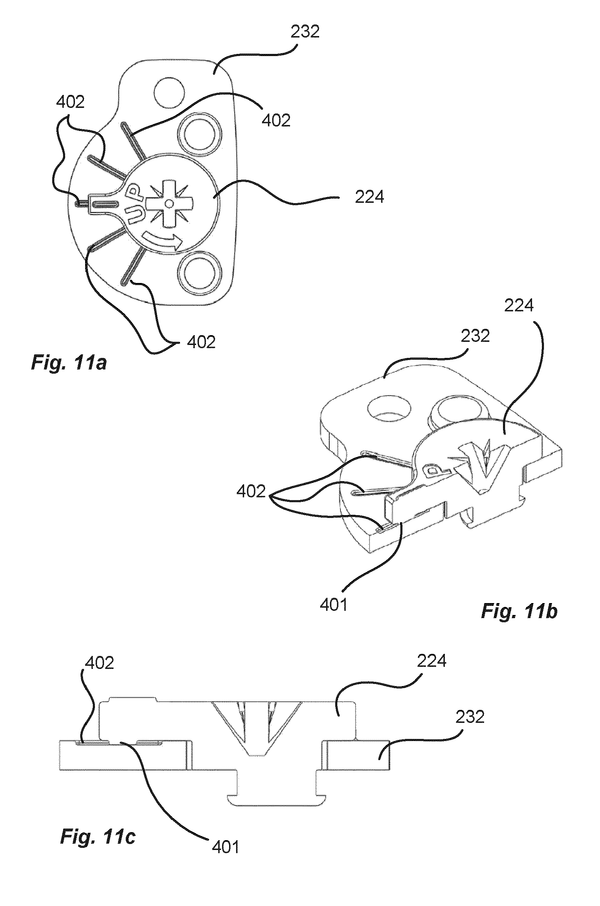

In the embodiments described above, the inside of the head 224 or the bolt 322 may be provided with a grade flange 401, in accordance with Figs. 11a to 11c. The grade flange 401 is a straight ridge, extending radially, such that it may cooperate/interact with a grade groove 402 on the mounting plate 232 or the upper part 214. Instead of a grade flange 401 in the form of a straight ridge, the inside of the head 224 or the bolt 322 may be provided with a grade flange 401 in form of protrusion radially distributed at specific grade positions around the rotational axis of the head 224 or bolt 322. The mounting plate 232 or the upper part 214 may have several grade grooves or indentions 402 evenly and radially, with respect of the rotational axis of the head 224 or bolt 322, distributed on the surface on which the head 224 or bolt 322 rests. The interaction between the grade flange 401 and the grade groove or indention 402 increases the friction between the head 224 or bolt 322 and the mounting plate 232 or upper part 214, respectively. In this way the head 224 or bolt 322 may be turned into preset adjustment grades, defined by the positions of the grade grooves or indentions 402. This improves the adjustment certainty between the rails located on each side of the drawer, since the user may know exactly how much each rail has been vertically adjusted. The inverse is also possible, i.e. where the head 224 or bolt 322 are provided with a groove and the mounting plate 232 or upper part 214, respectively, are provided with corresponding flanges.

The embodiments described with reference to all figures thus share the same concept of deforming the upper part for allowing facilitated alignment of the drawer's front relative the chest or cabinet.

In the claims, the term "comprises/comprising" does not exclude the presence of other elements or steps. Reference signs in the claims are provided merely as a clarifying example and shall not be construed as limiting the scope of the claims in any way.

## Claims

1. A sliding guide rail (200), comprising
means for attaching said rail (200) to a drawer (11a, 11b, 11c),
a vertical web for attachment to said drawer (11a, 11b, 11c),
a first surface (210) continuously extending from a first end (202) to a second end (204) of said rail (200), said first surface (210) being engageable with a sliding member of another rail (100),
an adjusting device (220) capable of deforming said first surface (210) at said second end (204), such that the position of said first surface (210) at the second end (204) is displaceable relative to said means for attaching said rail, wherein said second end (204) of said vertical web comprises an upper part (214) including said first surface (210), and a lower part (216) being separated from said upper part (214) by means of a slit (218), and wherein said adjusting device (220) is connected to said upper part (214) and to said lower part (216),
**characterized in that**,
said adjusting device (220) is attached to said second end (204) of said rail (200) by means of an eccentric (222), and
**in that** said eccentric (222) comprises a disc member (228) arranged within a space (234), and wherein the outer periphery of said disc member (228) and the outer periphery of said space (234) comprises a plurality of engageable cogs (229, 239) for preventing unintentional rotation of the disc member (228) within said space (234).

2. The sliding guide rail of claim 1, wherein the slit 218 is a cut-out located roughly in the middle of the sliding guide rail (200).

3. The sliding guide rail of claim 1 or 2, wherein said adjusting device (220) is rotatable relative said upper part (214) and said lower part (216).

4. The sliding guide rail according to any one of the preceding claims, wherein said first surface (210) is located on a runner flange with a U-shape for engaging with a wheel or roller acting as said sliding member.

5. A sliding rail assembly, comprising a first rail (100) having a sliding member attached to said first rail (100), and a sliding guide rail (200) according to any one of claims 1 to 4, wherein said sliding guide rail (200) is engageable with said first rail (100) for allowing sliding movement between said first rail (100) and said sliding guide rail (200).

6. A drawer comprising at least one sliding rail assembly according to claim 5, wherein a first rail (100) of said assembly is attached to a frame of a chest or a cabinet, and wherein a sliding guide rail (200) of said assembly is attached to said drawer.

7. A method for aligning a drawer, comprising the steps of:
providing a first rail (100) on a frame of a chest or a cabinet,
providing a sliding guide rail (200) on a drawer of said chest or cabinet, said sliding guide rail (200) having a first surface (210) continuously extending from a first end (202) to a second end (204) of said rail (200), said first surface (210) being engageable with a sliding member of said first rail (100),
wherein said second end (204) of said rail (200) comprises an upper part (214) including said first surface (210), and a lower part (216) being separated from said upper part (214) by means of a slit (218),
aligning said drawer by plastically deforming said first surface (210) at said second end (204) by means of an adjusting device (220), **characterized in that** said adjusting device (220) is attached to said second end (204) of said rail (200) by means of an eccentric (222), and **in that** said eccentric (222) comprises a disc member (228) arranged within a space (234), and wherein the outer periphery of said disc member (228) and the outer periphery of said space (234) comprises a plurality of engageable cogs (229, 239) for preventing unintentional rotation of the disc member (228) within said space (234).

8. The method according to claim 7, wherein the adjusting device (220, 320) is mounted to the upper part (214) as well as to the lower part (216), such that the upper part (214) is kept at a fixed distance from the lower part (216).

## Patentansprüche

1. Gleitführungsschiene (200), umfassend
Mittel zum Befestigen der Schiene (200) an einer Schublade (11a, 11b, 11c),
eine vertikale Rippe zur Befestigung an der Schublade (11a, 11b, 11c),
eine erste Oberfläche (210), welche sich kontinuierlich von einem ersten Ende (202) zu einem zweiten Ende (204) der Schiene (200) erstreckt, wobei die erste Oberfläche (210) mit einem Gleitelement einer weiteren Schiene (100) in Wirkverbindung bringbar ist,
eine Anpassungseinrichtung (220), welche dazu in der Lage ist, die erste Oberfläche (210) am zweiten Ende (204) zu deformieren, so dass die Position der ersten Oberfläche (210) am zweiten Ende (204) relativ zu den Mitteln zum Befestigen der Schiene verlagerbar ist, wobei das zweite Ende (204) der vertikalen Rippe einen oberen Teil (214), welcher die erste Oberfläche (210) beinhaltet, und einen unteren Teil (216) umfasst, der von dem oberen Teil (214) mittels eines Schlitzes (218) getrennt ist, und wobei die Anpassungseinrichtung (220) mit dem oberen Teil (214) und dem unteren Teil (216) verbunden ist,
**dadurch gekennzeichnet, dass**
die Anpassungseinrichtung (220) an dem zweiten Ende (204) der Schiene (200) mittels eines Exzenters (222) befestigt ist, und dass
der Exzenter (222) ein Scheibenelement (228) umfasst, welches in einer Aussparung (234) angeordnet ist, und wobei die äußere Peripherie des Scheibenelements (228) und die äußere Peripherie der Aussparung (234) eine Vielzahl von in Wirkverbindung bringbarer Zähne (229, 239) umfasst, zur Vermeidung ungewollter Rotation des Scheibenelements (228) in der Aussparung (234).

2. Gleitführungsschiene nach Anspruch 1, wobei der Schlitz (280) ein Ausschnitt ist, welcher ungefähr in der Mitte der Gleitführungsschiene (200) angeordnet ist.

3. Gleitführungsschiene nach Anspruch 1 oder 2, wobei die Anpassungseinrichtung (220) relativ zum oberen Teil (214) und zum unteren Teil (216) drehbar ist.

4. Gleitführungsschiene nach einem der vorangehenden Ansprüche, wobei die erste Oberfläche (210) auf einem Laufradspurkranz mit einer U-Form angeordnet ist, zum Zusammenwirken mit einem Rad oder Roller, welcher als besagtes Gleitelement fungiert.

5. Gleitschienenanordnung umfassend eine erste Schiene (100) mit einem an der ersten Schiene (100) befestigten Gleitelement und einer zweiten Gleitschiene (200) gemäß einem der Ansprüche 1 bis 4, wobei die Gleitführungsschiene (200) mit der ersten Schiene (100) in Wirkverbindung bringbar ist, zum Erlauben einer Gleitbewegung zwischen der ersten Schiene (100) und der Gleitführungsschiene (200).

6. Schublade umfassend zumindest eine Gleitschienenanordnung nach Anspruch 5, wobei eine erste Schiene (100) der Anordnung an einem Gehäuse einer Kommode oder eines Schranks befestigt ist und wobei eine Gleitführungsschiene (200) der Anordnung an der Schublade befestigt ist.

7. Verfahren zum Ausrichten einer Schublade, umfassen die Schritte:
Bereitstellen einer ersten Schiene (100) an einem Gehäuse einer Kommode oder eines Schranks,
Bereitstellen einer Gleitführungsschiene (200) an einer Schublade der Kommode oder des Schranks, wobei die Gleitführungsschiene (200) eine erste Oberfläche (210) aufweist, welche sich kontinuierlich von einem ersten Ende (202) zu einem zweiten Ende (204) der Schiene (200) erstreckt, wobei die erste Oberfläche (210) mit einem Gleitelement der ersten Schiene (100) in Wirkverbindung bringbar ist,
wobei das zweite Ende (204) der Schiene (200) einen oberen Teil (214), welcher die erste Oberfläche (210) beinhaltet, und einen unteren Teil (216) umfasst, welcher von dem oberen Teil (214) mittels eines Schlitzes (218) getrennt ist,
Ausrichten der Schublade durch plastisches Deformieren der ersten Oberfläche (210) am zweiten Ende (204) mittels einer Anpassungseinrichtung (220),
**dadurch gekennzeichnet, dass**
die Anpassungseinrichtung (220) an dem zweiten Ende (204) der Schiene (200) mittels eines Exzenters (222) befestigt ist und dadurch, dass
der Exzenter (222) ein Scheibenelement (228) umfasst, welches in einer Aussparung (234) angeordnet ist und wobei die äußere Peripherie des Scheibenelements (228) und die äußere Peripherie der Aussparung (234) eine Vielzahl von in Wirkverbindung bringbarer Zähne (229, 239) umfasst, um eine unbeabsichtigte Rotation des Scheibenelements (228) innerhalb der Aussparung (234) zu verhindern.

8. Verfahren nach Anspruch 7, wobei die Anpassungseinrichtung (220, 320) sowohl am oberen Teil (214), als auch auch am unteren Teil (216) montiert ist, so dass der obere Teil (214) in einem festen Abstand vom unteren Teil (216) gehalten wird.

## Revendications

1. Rail de guidage coulissant (200), comprenant
un moyen permettant de fixer ledit rail (200) à un tiroir (11a, 11b, 11c),
une bande verticale de fixation audit tiroir (11a, 11b, 11c),
une première surface (210) s'étendant de façon continue d'une première extrémité (202) à une seconde extrémité (204) dudit rail (200), ladite première surface (210) pouvant coopérer avec un élément coulissant d'un autre rail (100),
un dispositif de réglage (220) pouvant déformer ladite première surface (210) au niveau de ladite seconde extrémité (204), de sorte que la position de ladite première surface (210) au niveau de la seconde extrémité (204) peut être décalée par rapport audit moyen de fixation dudit rail, dans lequel ladite seconde extrémité (204) de ladite bande verticale comprend une partie supérieure (214) comprenant ladite première surface (210), et une partie inférieure (216) séparée de ladite partie supérieure (214) au moyen d'une fente (218), et dans lequel ledit dispositif de réglage (220) est en prise avec ladite partie supérieure (214) et avec ladite partie inférieure (216),
**caractérisé en ce que** ledit dispositif de réglage (220) est fixé à ladite seconde extrémité (204) dudit rail (200) au moyen d'un excentrique (222), et
**en ce que** ledit excentrique (222) comprend un élément de disque (228) disposé à l'intérieur d'un espace (234), et dans lequel la périphérie extérieure dudit élément disque (228) et la périphérie extérieure dudit espace (234) comprennent plusieurs encoches pouvant faire l'objet d'un engrènement (229, 239) permettant d'empêcher une rotation accidentelle de l'élément disque (228) à l'intérieur dudit espace (234).

2. Rail de guidage coulissant selon la revendication 1, dans lequel la fente (218) est découpée à une position correspondant grossièrement au milieu du rail de guidage coulissant (200).

3. Rail de guidage coulissant selon la revendication 1 ou 2, dans lequel ledit dispositif de réglage (220) est mobile en rotation par rapport à ladite partie supérieure (214) et à ladite partie inférieure (216).

4. Rail de guidage coulissant selon l'une quelconque des revendications précédentes, dans lequel ladite première surface (210) est située sur un rebord de roulement ayant une forme de U permettant une coopération avec une roue ou un galet agissant en tant que dit élément coulissant.

5. Ensemble de rails coulissants, comprenant un premier rail (100) comportant un élément coulissant fixé audit premier rail (100) et un second rail de guidage coulissant selon l'une quelconque des revendications 1 à 4, dans lequel ledit rail de guidage coulissant (200) peut coopérer avec ledit premier rail (100) pour permettre un déplacement coulissant entre ledit premier rail (100) et ledit rail de guidage coulissant (200).

6. Tiroir comprenant au moins un ensemble de rails coulissants selon la revendication 5, dans lequel un premier rail (100) dudit ensemble est fixé à un bâti d'une commode ou d'une armoire, et dans lequel un rail de guidage coulissant (200) dudit ensemble est fixé audit tiroir.

7. Procédé d'alignement d'un tiroir, comprenant les étapes consistant à :
disposer un premier rail (100) sur un bâti d'une commode ou d'une armoire,
disposer un rail de guidage coulissant (200) sur un tiroir de ladite commode ou de ladite armoire, ledit rail de guidage coulissant (200) comportant une première surface (210) s'étendant de façon continue d'une première extrémité (202) à une seconde extrémité (204) dudit rail (200), ladite première surface (210) pouvant coopérer avec un élément coulissant dudit premier rail (100),
dans lequel ladite seconde extrémité (204) dudit rail (200) comprend une partie supérieure (214) comprenant ladite première surface (210), et une partie inférieure (216) qui est séparée de ladite partie supérieure (214) au moyen d'une fente (218),
aligner ledit tiroir en déformant plastiquement ladite première surface (210) au niveau de ladite seconde extrémité (204) au moyen d'un dispositif de réglage (220),
**caractérisé en ce que** ledit dispositif de réglage (220) est fixé à ladite seconde extrémité (204) dudit rail (200) au moyen d'un excentrique (222), et
**en ce que** ledit excentrique (222) comprend un élément de disque (228) disposé à l'intérieur d'un espace (234), et dans lequel la périphérie extérieure dudit élément disque (228) et la périphérie extérieure dudit espace (234) comprennent plusieurs encoches pouvant faire l'objet d'un engrènement (229, 239) permettant d'empêcher une rotation accidentelle de l'élément disque (228) à l'intérieur dudit espace (234).

8. Procédé selon la revendication 7, dans lequel le dispositif de réglage (220, 320) est monté sur la partie supérieure (214) de même que sur la partie inférieure (216), de sorte que la partie supérieure (214) est maintenue à une distance fixe de la partie inférieure (216).
